(19) Europäisches Patentamt

European Patent Office

Office européen des brevets

(11) **EP 0 948 082 A1**

(12) **EUROPEAN PATENT APPLICATION**

(43) Date of publication:
06.10.1999 Bulletin 1999/40

(51) Int. Cl.⁶: $H01Q\ 3/26$, $H04B\ 7/08$

(21) Application number: 98302656.8

(22) Date of filing: 03.04.1998

(84) Designated Contracting States:
AT BE CH CY DE DK ES FI FR GB GR IE IT LI LU
MC NL PT SE
Designated Extension States:
AL LT LV MK RO SI

(71) Applicant:
LUCENT TECHNOLOGIES INC.
Murray Hill, New Jersey 07974-0636 (US)

(72) Inventor: **Speight, Timothy James**
**Clifton, Bristol, BS8 1AA (GB)**

(74) Representative:
**Funnell, Samantha Jane et al**
**Lucent Technologies UK Limited,**
**5 Mornington Road**
**Woodford Green, Essex IG8 0TU (GB)**

(54) **Adaptive antenna**

(57)   Adaptive antennas are used to counter dispersion due to multipath propagation and interference from other stations using the same frequency. Each of the antennas in the array has a respective tapped delay line in which the tap output signals are weighted and summed. In a known theoretical proposal, the weights W are determined as follows:

$$w = R_{xx}^{-1} r_{xd}$$

where $R_{xx}$ is the autocorrelation matrix of the input to the system and $r_{xd}$ is the crosscorrelation vector of the input signal and the known sequence. In practice estimates of $R_{xx}$ and $r_{xd}$ may be obtained by averaging the instantaneous matrices and vectors over the training sequence.

A method to provide an improved estimate of $R_{xx}$ is disclosed in which the estimate of $R_{xx}$ is refined by calculating a new estimate

$$R_{xx}(new) = (R_{xx} + \beta.I \times trace(R_{xx}))$$

where $\beta$ is a scalar value and I is the identity matrix, and wherein successive iterations are evaluated by:

comparing the real part of the summed tap output signals with a set level;
ascribing a symbol value of logical zero to those summed tap output signals which fall to one side of the set level and ascribing a symbol value of logical one to those summed tap output signals which fall to the other side of the set level;
calculating the mean of the levels of those signals ascribed the value logical zero and the mean of the levels of those signals ascribed the value logical one;
calculating the distance between the level of each signal ascribed the value logical zero and the respective mean, and the level of each signal ascribed the value logical one and the respective mean;
calculating the sum of the distances from the means;
calculating the distances of the levels of all signals from the set level;
calculating the sum of the distances of the levels of all signals from the set level;
calculating the ratio of the sum of the distances from the means to the sum of the distances of the levels of all symbols from the set level.

FIG.1

# FIG.2

## Description

This invention relates to adaptive antennas, e.g. for GSM cellular mobile telephone systems.

Adaptive antennas are used to counter dispersion due to multipath propagation and interference from other stations using the same frequency. In order to adapt the antenna, each frame of symbols transmitted by a mobile terminal contains a "mid-amble" comprising a known "training" sequence of 26 symbols. The mobile terminal is instructed by the relevant base station to use one of a number of predetermined training sequences so as to enable interfering terminals to be distinguished. Each of the antennas in the array has a respective tapped delay line in which the tap output signals are weighted and summed. In a known theoretical proposal, the weights W are determined as follows:

$$w = R_{xx}^{-1} r_{xd}$$

where $R_{xx}$ is the autocorrelation matrix of the input to the system and $r_{xd}$ is the crosscorrelation vector of the input signal and the known sequence. In practice estimates of $R_{xx}$ and $r_{xd}$ may be obtained by averaging the instantaneous matrices and vectors over the training sequence.

An improved estimate of $R_{xx}$ may be obtained, in accordance with the invention, which provides a method of adjusting tap weights of an adaptive antenna array wherein each of a plurality of antennas has a respective tapped delay line in which the tap output signals are weighted and summed, the weights w being determined as follows:

$$w = R_{xx}^{-1} r_{xd}$$

where $R_{xx}$ is an estimate of the autocorrelation matrix of the input to the system and $r_{xd}$ is an estimate of the crosscorrelation vector of the input signal and a known sequence, characterised by the steps of:

refining the estimate of $R_{xx}$ by calculating a new estimate

$$R_{xx}(new) = (R_{xx} + \beta.I \times trace(R_{xx}))$$

where $\beta$ is a scalar value and I is the identity matrix, and wherein successive iterations are evaluated by: comparing the real part of the summed tap output signals with a set level;
ascribing a symbol value of logical zero to those summed tap output signals which fall to one side of the set level and ascribing a symbol value of logical one to those summed tap output signals which fall to the other side of the set level;
calculating the mean of the levels of those signals ascribed the value logical zero and the mean of the levels of those signals ascribed the value logical one;
calculating the distance between the level of each signal ascribed the value logical zero and the respective mean, and the level of each signal ascribed the value logical one and the respective mean;
calculating the sum of the distances from the means;
calculating the distances of the levels of all signals from the set level;
calculating the sum of the distances of the levels of all signals from the set level;
calculating the ratio of the sum of the distances from the means to the sum of the distances of the levels of all symbols from the set level.

The method preferably includes the steps of multiplying the ratio by
(1 + N) where N is the number of errors between the symbols values ascribed by reference to the set level and the symbol in the known sequence; and utilizing the $R_{xx}$(new) for which the product is least.

In each iteration $\beta$ is preferably one of a set of predetermined values from $10^{-9}$ to 1.

Preferably, estimates are evaluated by a binary search through the set of values of $\beta$.

One embodiment of the invention will now be described, by way of example, with reference to the accompanying drawings, in which:

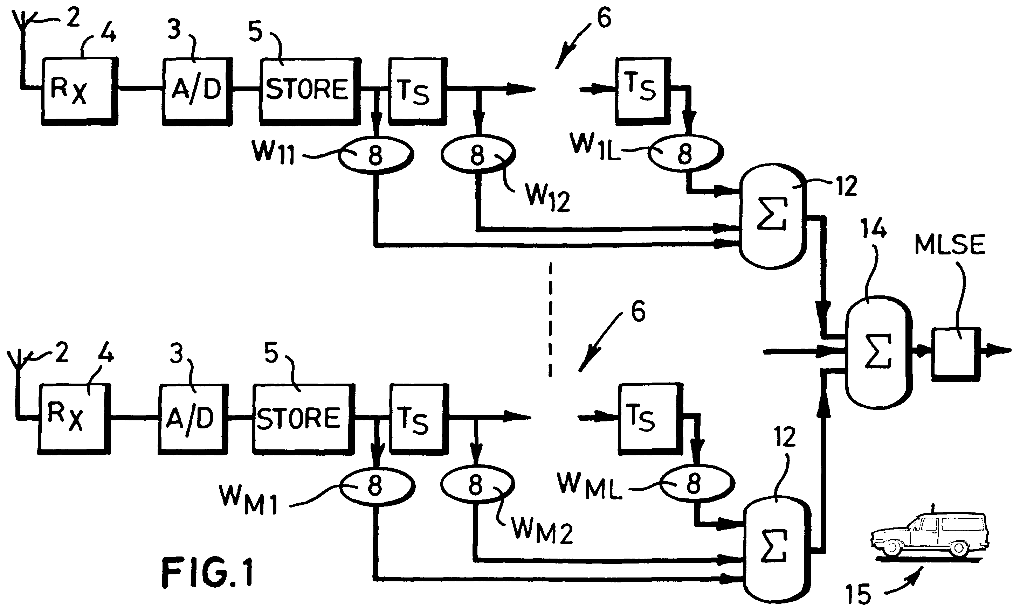

Figure 1 is a schematic drawing of an adaptive antenna system and its tapped delay line equaliser; and
Figure 2 is an illustrative plot of signal levels of the real part of the out put from the receiver.

Referring to the drawings, each antenna 2 in an array of M antennas is connected to a respective receiver 4. The signals received by the array are gaussion minimum shift key (GMSK) modulated. The signals are de-rotated to remove differential phase encoding which is applied in GMSK modulation.

The de-rotated signal from each receiver is fed to a respective analog to digital convertor 3 where it is sampled and quantised, and the quantised samples are converted to coded digital signals.

The digitised de-rotated signals are stored in a store 5 from which they can be read in sequence.

The digitaised de-rotated signals are read in sequence to a respective symbol spaced tapped delay line 6 for each antenna. The tapped delay line may be physical or simulated by one or more data processors. The processing is carried out faster than real time in either case so that several iterations can be caried out in one frame.

Whether the tapped delay line is physical or virtual, at each tap, the signal is weighted by individual weights 8, and the weighted signals are summed in a summer 12. The sums from each equaliser are summed in a summer 14.

It is desired to adjust the weights to compensate for multipath propagation and for interference from other terminals using the same channel.

In each frame of the signal transmitted by a mobile terminal 15, there is a mid-amble comprising a known training sequence of 26 symbols. There is a plurality of different training sequences and the mobile terminal 15 is instructed by the base station which sequence to send. The training sequence is not reused by mobile terminal 15 which might interfere with the terminal 14, so that they can be distinguished.

The theoretical basis for weighting the delay line taps is the Wiener-Hopf equation:

$$w = R_{xx}^{-1} r_{xd}$$

where $R_{xx}$ is the autocorrelation matrix of the input to the system and $r_{xd}$ is the crosscorrelation vector of the input signal and the known sequence.

An estimate of the autocorrelation matrix is made by averaging the instantaneous (i.e. symbol by symbol) matrices.

The matrix $R_{xx}$ is then recalculated as follows:

$$R_{xx}(new) = (R_{xx} + \beta.I \times trace(R_{xx}))$$

where $\beta$ is a scalar value and I is the identity matrix.

The output of summer 14 is analysed to temporarily ascribe symbol values so as to enable $R_{xx}(new)$ to be evaluated.

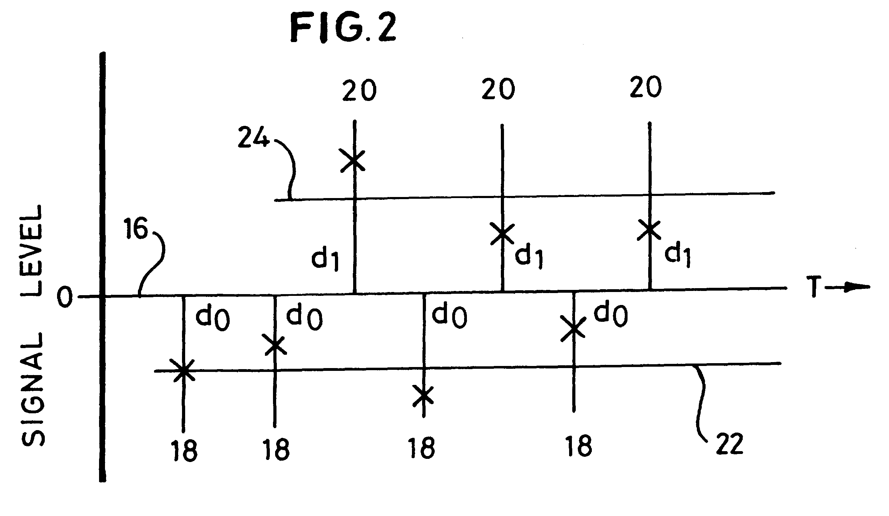

A temporary decision to ascribe a symbol value of logical zero or a logical one depends on whether the level of the real part of the output of the summer 14 is positive or negative. Thus a set decision level 16 of zero (see Figure 2) distinguishes the level of logical zero symbols 18 from the level of logical one symbols 20.

The mean 22 of the distances $d_0$ between the zero level 16 and the levels of the symbols 18 ascribed the value of zero is calculated. The mean 24 of the distances $d_1$ between the zero level 16 and the levels of the symbols 20 ascribed the value of logical one is calculated.

The distance between the level of each symbol 18 ascribed the value logical zero and the respective mean 22 is calculated. The distance between the level of each symbol 20 ascribed the value logical one and the respective mean 24 is calculated.

The sum of all the distances from the means is calculated.

The distances of the levels of all symbols from the decision level 16 is calculated.

The sum of the distances of the levels of all symbols from the set decision level 16 is calculated.

The ratio of the sum of the distances from the means to the sum of the distances of the levels of all symbols from the set level is calculated. The smaller this is, the better the effect of the estimated autocorrelation matrix $R_{xx}$. Ideally, the levels of the symbols ascribed the value logical zero would all be the same, the levels of the symbols ascribed the value logical one would all be the same and the levels of zero and one symbols would be equally spaced from the decision level 16.

In order to take into account that a low value could possibly be obtained even if the error rate in the recovered sequence is high, the ratio is preferably multiplied by $(1 + N)$ where N is the number of errors between the symbols ascribed values by reference to the set level and the symbols in the known sequence.

The value of the product so obtained is a measure of goodness i.e. how good the estimate $R_{xx}(new)$ is. The lower the value the better the estimate.

$R_{xx}$ is recalculated for a set of values of $\beta$, for example $10^{-9}$, $10^{-8}$, $10^{-7}$ ...... $10^{0}$, and the matrix utilised is that having the lowest measure of goodness. It is not necessary to calculate the measure of goodness for all values of $\beta$. A search strategy may be employed so that a value e.g. $10^{-5}$ approximately in the centre of the set is first used. A value about e.g. $10^{-2}$ about half way between the centre and one end of the set is then used, so that the value of $\beta$ increases, for example. If the result is better than the last, a further value e.g. $10^{-1}$ is used making a change in $\beta$ in the same direction is calculated. If at any point, the measure is less good, the direction of change is reversed so, for example if the measure of goodness for $\beta=10^{-2}$ is less good than that for $\beta=10^{-5}$, the value of $\beta$ would next be set at $10^{-7}$ or $10^{-8}$.

**Claims**

1. A method of adjusting tap weights of an adaptive antenna array wherein each of a plurality of antennas has a respective tapped delay line in which the tap output signals are weighted and summed, the weights w being determined as follows:

$$w = R_{xx}^{-1} r_{xd}$$

where $R_{xx}$ is an estimate of the autocorrelation matrix of the input to the system and $r_{xd}$ is an estimate of the crosscorrelation vector of the input signal and a known sequence, characterised by the steps of:

refining the estimate of $R_{xx}$ by calculating a new estimate

$$R_{xx}(new) = (R_{xx} + \beta.I \times trace(R_{xx}))$$

where $\beta$ is a scalar value and I is the identity matrix, and wherein successive estimates are evaluated by:
comparing the real part of the summed tap output signals with a set level;

ascribing a symbol value of logical zero to those summed tap output signals which fall to one side of the set level and ascribing a symbol value of logical one to those summed tap output signals which fall to the other side of the set level;

calculating the mean of the levels of those signals ascribed the value logical zero and the mean of the levels of those signals ascribed the value logical one;

calculating the distance between the level of each signal ascribed the value logical zero and the respective mean, and the level of each signal ascribed the value logical one and the respective mean;

calculating the sum of the distances from the means;

calculating the distances of the levels of all signals from the set level;

calculating the sum of the distances of the levels of all signals from the set level;

calculating the ratio of the sum of the distances from the means to the sum of the distances of the levels of all symbols from the set level.

2. A method as claimed in claim 1, including the steps of multiplying the ratio by

$(1 + N)$ where N is the number of errors between the symbols values ascribed by reference to the set level and the symbols in the known sequence; and utilising the $R_{xx}(new)$ for which the product is least.

3. A method as claimed in claim 1 or 2, wherein in each iteration $\beta$ is one of a set of predetermined values from $10^{-9}$ to 1.

4. A method as claimed in claim 3, wherein iterations are evaluated by a binary search through the set of values of $\beta$.

FIG.1

EP 0 948 082 A1

# FIG.2

European Patent
Office

**EUROPEAN SEARCH REPORT**

Application Number

EP 98 30 2656

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 582 233 A (NEC)<br>9 February 1994 (1994-02-09)<br>* abstract *<br>* page 3, line 17 - line 53; figure 2 *<br>--- | 1-4 | H01Q3/26<br>H04B7/08 |
| A | WO 97 44919 A (POST UND TELEKOM AUSTRIA)<br>27 November 1997 (1997-11-27)<br>* abstract *<br>* page 6, line 31 - page 7, line 32;<br>figure 2 *<br>--- | 1-4 | |
| A | US 5 530 725 A (KOCH)<br>25 June 1996 (1996-06-25)<br>* abstract *<br>* column 1, line 53 - column 3, line 8;<br>figures 1-6 *<br>--- | 1-4 | |
| A | WO 96 00991 A (INTERDIGITAL TECHNOLOGY)<br>11 January 1996 (1996-01-11)<br>* abstract; figures 1-5 *<br>--- | 1 | |
| A | US 5 349 609 A (TSUJIMOTO)<br>20 September 1994 (1994-09-20)<br>* abstract *<br>* column 3, line 33 - column 4, line 5;<br>figures 1-3 *<br>--- | 1 | TECHNICAL FIELDS<br>SEARCHED (Int.Cl.6)<br><br>H01Q<br>H04B |
| A | GB 2 229 580 A (STC PLC)<br>26 September 1990 (1990-09-26)<br>* abstract; figures 1-3 *<br>--- | 1 | |
| | -/-- | | |

The present search report has been drawn up for all claims

| Place of search | Date of completion of the search | Examiner |
|---|---|---|
| THE HAGUE | 3 September 1998 | ANGRABEIT, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## EUROPEAN SEARCH REPORT

**European Patent Office**

**Application Number**

EP 98 30 2656

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WANG H ET AL: "ADAPTIVE ARRAY ANTENNA COMBINED WITH TAPPED DELAY LINE USING PROCESSING GAIN FOR DIRECT-SEQUENCE/SPREAD-SPECTRUM MULTIPLE-ACCESSSYSTEM" ELECTRONICS & COMMUNICATIONS IN JAPAN, PART I - COMMUNICATIONS, vol. 76, no. 5, 1 May 1993 (1993-05-01), pages 101-113, XP000425186 * page 105, paragraph 4. - page 109, paragraph 5. * | 1 | |

TECHNICAL FIELDS SEARCHED (Int.Cl.6)

The present search report has been drawn up for all claims

| Place of search | Date of completion of the search | Examiner |
|---|---|---|
| THE HAGUE | 3 September 1998 | ANGRABEIT, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 948 082 A1

**ANNEX TO THE EUROPEAN SEARCH REPORT
ON EUROPEAN PATENT APPLICATION NO.**                EP 98 30 2656

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-1998

| Patent document cited in search report | | Publication date | Patent family member(s) | | Publication date |
|---|---|---|---|---|---|
| EP 0582233 | A | 09-02-1994 | JP | 6053870 A | 25-02-1994 |
| | | | US | 5425059 A | 13-06-1995 |
| WO 9744919 | A | 27-11-1997 | AU | 2756897 A | 09-12-1997 |
| | | | CA | 2255767 A | 27-11-1997 |
| | | | EP | 0900484 A | 10-03-1999 |
| US 5530725 | A | 25-06-1996 | DE | 4018044 A | 12-12-1991 |
| | | | AU | 652154 B | 18-08-1994 |
| | | | AU | 7810491 A | 12-12-1991 |
| | | | DE | 59106890 D | 21-12-1995 |
| | | | EP | 0460748 A | 11-12-1991 |
| | | | HK | 165396 A | 13-09-1996 |
| | | | JP | 4261229 A | 17-09-1992 |
| WO 9600991 | A | 11-01-1996 | US | 5659572 A | 19-08-1997 |
| | | | AU | 686858 B | 12-02-1998 |
| | | | AU | 3094295 A | 25-01-1996 |
| | | | BR | 9508146 A | 05-01-1999 |
| | | | CA | 2193843 A | 11-01-1996 |
| | | | CN | 1158187 A | 27-08-1997 |
| | | | DE | 19581691 T | 19-06-1997 |
| | | | DK | 145296 A | 26-02-1997 |
| | | | EP | 0767976 A | 16-04-1997 |
| | | | FI | 965223 A | 26-02-1997 |
| | | | JP | 10502505 T | 03-03-1998 |
| | | | NZ | 290255 A | 26-06-1998 |
| | | | SE | 9604711 A | 21-02-1997 |
| | | | US | 5633889 A | 27-05-1997 |
| | | | US | 5926502 A | 20-07-1999 |
| US 5349609 | A | 20-09-1994 | JP | 2780576 B | 30-07-1998 |
| | | | JP | 6061893 A | 04-03-1994 |
| GB 2229580 | A | 26-09-1990 | EP | 0459038 A | 04-12-1991 |

EPO FORM P0459

For more details about this annex : see Official Journal of the European Patent Office, No. 12/82